# EUROPEAN PATENT SPECIFICATION

(11) **EP 2 168 414 B1**
(45) Date of publication and mention of the grant of the patent: **01.08.2018**
(21) Application number: 09011944.7
(22) Date of filing: 18.09.2009
(51) Int. Cl.: A01B 59/06

(54) **Quick coupling device particularly for equipment of work vehicles**
Schnellkupplungsvorrichtung, insbesondere zur Ausrüstung von Arbeitsfahrzeugen
Dispositif de couplage rapide particulièrement pour l'équipement de véhicules de travail

(30) Priority: 30.09.2008 IT VI20080035 U
(43) Date of publication of application: 31.03.2010
(73) Proprietor: MULTIONE SRL, 36040 Grumolo delle Abbadesse (VI) (IT)
(72) Inventor: Zanini, Stefano, 36040 Grumolo delle Abbadesse (VI) (IT)
(74) Representative: Forattini, Amelia

(56) References cited:
- EP-A1- 0 952 013
- US-A- 3 204 793
- US-A- 3 760 883
- US-A- 5 590 483

## Description

The present invention relates to a quick coupling device, particularly for equipment of work vehicles, constituted for example by earth-moving machines or by farming machines.

As is known, equipment constituted by buckets, demolition hammers, jaws and others, are generally associated with the arms of work vehicles by means of connectors that can ensure their interchangeability.

In order to facilitate the installation and replacement of the tools, quick coupling devices, that are different in terms of configuration and dimensions, are used more and more frequently.

In particular, a conventional quick coupling device is essentially constituted by a fixed portion and by a removable portion, which are detachably associated with each other.

While the fixed portion is attached to the equipment to be coupled, the removable portion can be associated with the end of the arm of the work vehicle.

Coupling is generally obtained by mating fixed hooks with corresponding receptacles and by the interaction of movable locking pins with a corresponding number of locking brackets.

The locking pins can be activated manually or by means of mechanical transmissions that transmit the motion of double-acting oil pressure-operated cylinders.

US-3760883 **discloses a quick hitch assembly, for connecting and disconnecting implements such as snow plows, buckets, blades and the like, to the front of a vehicle, comprising a single hydraulic cylinder operating a link mechanism.**

The conventional devices have aspects that can be improved.

While manually actuated devices are awkward and slow, the ones equipped with mechanical transmissions are subject to considerable wear and therefore often have unwanted plays.

It should also be noted that those conventional devices are usually mutually exclusive, i.e., manually actuated devices generally cannot be interchanged with the ones actuated by oil pressure-operated cylinders and gears.

The aim of the invention is to solve the problems described above, providing a quick coupling device, particularly for equipment of work vehicles, that is particularly simple in concept and can be replaced easily with a fully manual device.

Within the scope of this aim, a particular object of the invention is to provide a quick coupling device that does not have abnormal plays and optionally allows rapid and simple replacement of the parts that are most subject to wear.

Another object of the present invention is to provide a quick coupling device that allows to perform precise, safe and quick installations.

This aim, as well as these and other objects that will become better apparent hereinafter, are achieved by quick coupling device, particularly for equipment of work vehicles, **as claimed in the appended claims.**

Further characteristics and advantages will become better apparent from the description of a preferred but not exclusive embodiment of a quick coupling device according to the invention, illustrated by way of non-limiting example in the accompanying drawings, wherein:

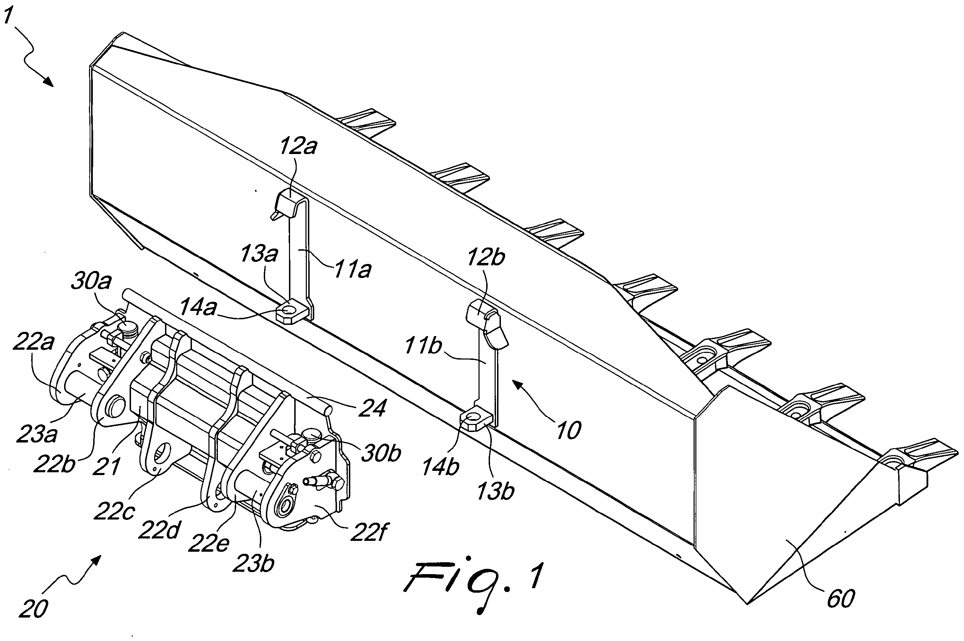

Figure 1 is a perspective view of a quick coupling device according to the invention and of a loading bucket;

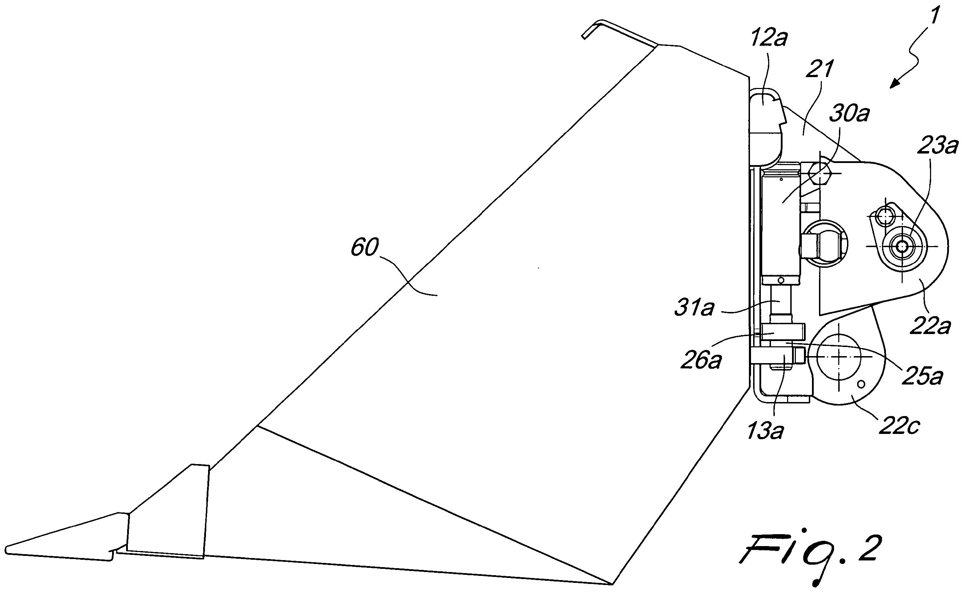

Figure 2 is a side view of the quick coupling device according to the invention, coupled to the loading bucket;

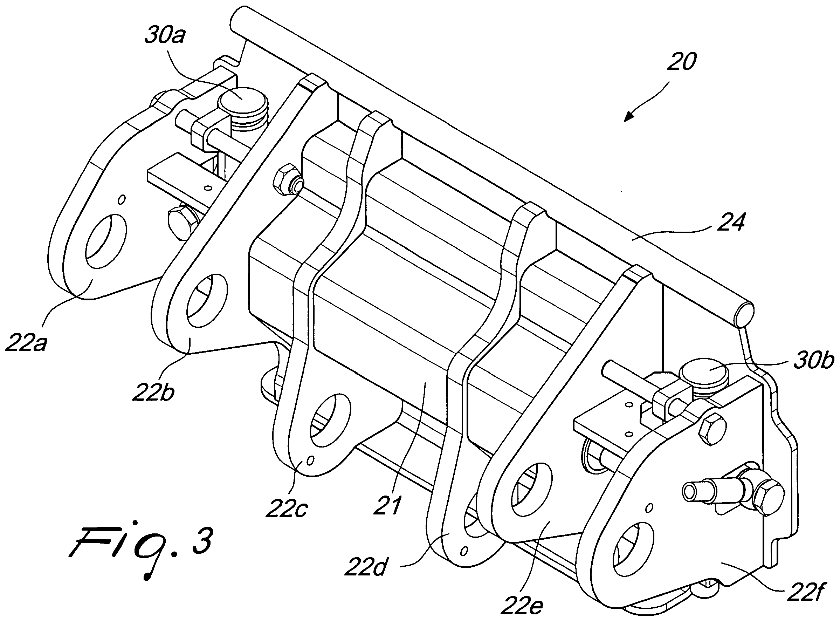

Figure 3 is a perspective view of the removable portion of the quick coupling device according to the invention,

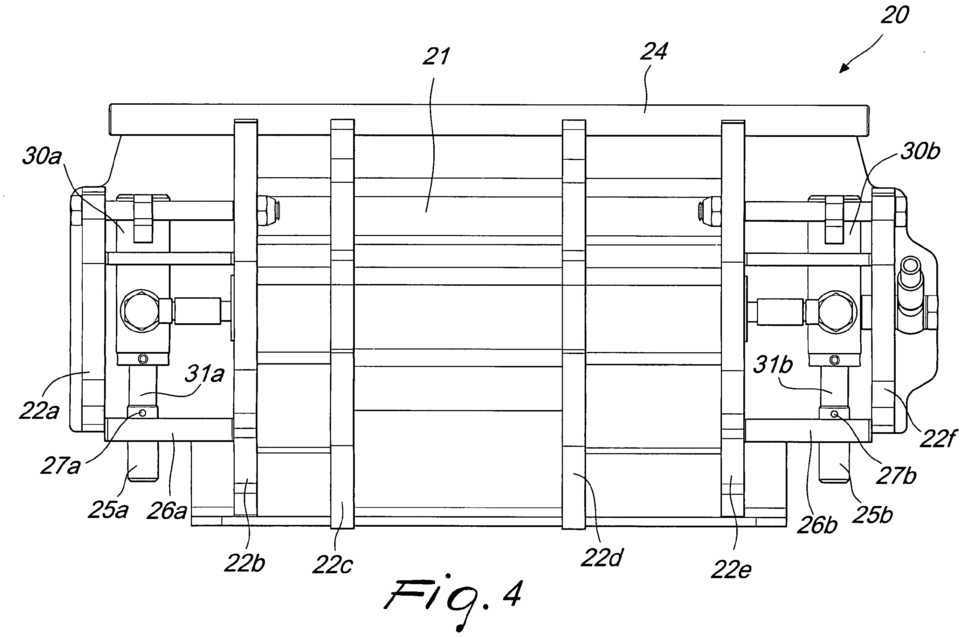

Figure 4 is a rear view of the removable portion of the preceding figure;

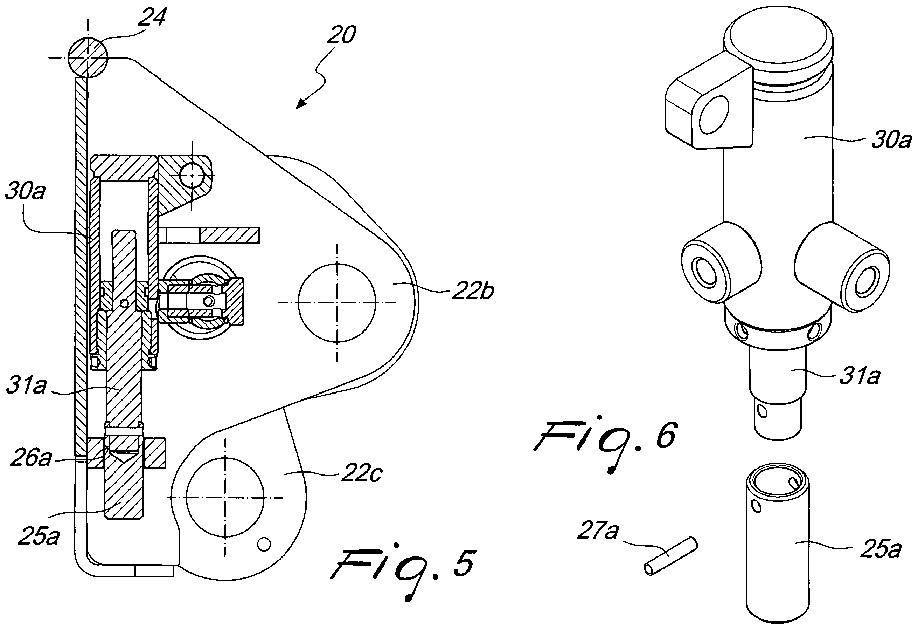

Figure 5 is a partially sectional side view of the removable portion of Figure 4;
Figure 6 is an exploded view of a component of the quick coupling device according to the invention.

With reference to the cited figures, a quick coupling device, particularly for equipment of work vehicles, is generally designated by the reference numeral 1.

The quick coupling device 1 has a fixed portion 10 and a removable portion 20, which can be mated to each other detachably.

The fixed portion 10 is constituted by a pair of supports 11a and 11b, which are arranged in a parallel configuration and are joined to a tool of a work vehicle. The work vehicle is not shown in the accompanying figures. The tool can be constituted for example by a loading bucket 60.

At the upper end of the supports 11a and 11b there are two hooks 12a and 12b, while at the lower ends there are two locking brackets 13a and 13b.

The locking brackets 13a and 13b are essentially constituted by wings provided respectively with through holes 14a and 14b.

The removable portion 20 is constituted by a structure 21, which can be detachably associated with the end of the arm of the work vehicle by means of flanges 22a, 22b, 22c, 22d, 22e and 22f and corresponding pins 23a and 23b.

A fixed engagement means is arranged substantially at the upper end of the removable portion 20. The fixed engagement means is constituted by a contoured bar 24 designed to engage the hooks 12a and 12b.

A movable engagement means is provided on the lower part of the removable portion 20 and preferably comprises a pair of locking pins 25a and 25b, which can slide along guides 26a and 26b and can engage in the through holes 14a and 14b provided in the locking brackets 13a and 13b.

According to the invention, the quick coupling device 1 has an actuation means, which is suitable to actuate directly the movable engagement means without the interaction of any type of transmission.

The actuation means comprises a pair of fluid-operated, oil-pressure driven or pneumatic cylinders 30a and 30b, which are connected directly to the locking pins 25a and 25b.

The locking pins 25a and 25b are in fact fixed to the end portion of the stems 31a and 31b of the fluid-operated cylinders 30a and 30b by means of elastic pins 27a and 27b or by any other suitable systems.

Accordingly, the locking pins 25a and 25b have the appearance of an axial extension of the stems 31a and 31b and are interchangeable in case of wear or breakage.

The fluid-operated cylinders 30a and 30b are preferably of the single-acting type and comprise an elastic means conceived to produce the protruding motion of the stems 31a and 31b, which is opposite to the motion produced by the pressurized fluid.

Therefore, when the fluid-operated cylinders 30a and 30b are in the inactive condition, the stems 31a and 31b are completely expelled and the locking pins 25a and 25b remain inserted in the through holes 14a and 14b, keeping the removable portion 20 stably engaged with the fixed portion 10.

As an alternative, also double-acting fluid-operated cylinders may be used in this device.

The operation of the device according to the invention is as follows.

The removable portion 20 is coupled and fixed to the fixed portion 10, first mating the fixed engagement means with the hooks 12a and 12b and subsequently mating the movable engagement means with the locking brackets 13a and 13b.

After the contoured bar 24 has engaged the hooks 12a and 12b with its ends, the fluid-operated cylinders 30a and 30b are fed with a pressurized fluid that produces the retraction of the stems 31a and 31b. This movement creates the space needed for the locking pins 25a and 25b to align with the through holes 14a and 14b.

When the supply to the hydraulic cylinders 30a and 30b is interrupted, the elastic means acts and causes the sliding of the locking pins 25a and 25b, inducing them to engage in the through holes 14a and 14b in order to join stably the removable portion 20 to the fixed portion 10.

The action of the elastic means ensures coupling even in case of accidental breakages or anomalies in the supply circuit of the hydraulic cylinders 30a and 30b.

In practice it has been found that the quick coupling device, particularly for equipment of work vehicles according to the invention, fully achieves the intended aim, since it has a particularly simple concept and can be easily replaced with a completely manual device.

The quick coupling device according to the invention does not have abnormal plays and allows rapid and simple replacement of the parts that are most subject to wear, in addition to ensuring precise, safe and quick installations.

## Claims

1. A quick coupling device, particularly for equipment of work vehicles, comprising a fixed portion **(10)** and a removable portion **(20)** which can be mated to each other detachably, said fixed portion **(10)** being attached to a tool (60) of a work vehicle, said removable portion **(20)** being associatable with the end of an arm of said work vehicle, said fixed portion **(10)** comprising a pair of hooks **(12a, 12b)** adapted to accommodate a fixed engagement means **(24)** joined to said removable portion **(20),** said removable portion **(20)** comprising a movable engagement means **(25a, 25b)** that interacts with **a pair of** locking brackets **(13a, 13b)** joined to said fixed portion **(10),** said device **further comprising** an actuation means **(30a, 30b)** directly **actuating** said movable engagement means **(25a, 25b); characterized in that said actuation means comprises a pair of single-acting fluid-operated cylinders (30a, 30b) having an elastic means which maintains the mating between said movable engagement means (25a, 25b) and said locking brackets (13a, 13b) when said single-acting fluid-operated cylinders (30a, 30b) are inactive; said movable engagement means comprising locking pins (25a, 25b), each connected directly to the end portion of the stem of each of said fluid-operated cylinders (30a, 30b) and sliding along a guide (26a, 26b) Joined to said fixed portion (10).**

2. The quick coupling device according to **claim 1, characterized in that** said fluid-operated cylinder **(30a, 30b)** is of the oil pressure-operated type.

3. The quick coupling device according to **claim 1, characterized in that** said fluid-operated cylinder **(30a, 30b)** is of the pneumatic type.

4. The quick coupling device according to **claim 1, characterized in that** said locking pins **(25a, 25b)** are interchangeable.

## Patentansprüche

1. Eine Schnellkupplungsvorrichtung, insbesondere zur Ausrüstung von Arbeitsfahrzeugen, die einen festen Abschnitt (10) und einen abnehmbaren Abschnitt (20) umfasst, die lösbar miteinander verbunden werden können, wobei der feste Abschnitt (10) an einem Werkzeug (60) eines Arbeitsfahrzeugs befestigt ist, wobei der abnehmbare Abschnitt (20) mit dem Ende eines Arms des Arbeitsfahrzeugs verbindbar ist, wobei der feste Abschnitt (10) ein Paar von Haken (12a, 12b) umfasst, die ausgebildet sind, um ein festes Eingriffsmittel (24) aufzunehmen, das mit dem abnehmbaren Abschnitt (20) verbunden ist; wobei der abnehmbare Abschnitt (20) ein bewegliches Eingriffsmittel (25a, 25b) umfasst, das mit einem Paar von Feststellhaltern (13a, 13b) zusammenwirkt, die mit dem festen Abschnitt (10) verbunden sind; wobei die Vorrichtung weiter ein Antriebsmittel (30a, 30b) umfasst, das das bewegliche Eingriffsmittel (25a, 25b) direkt antreibt; **dadurch gekennzeichnet, dass** das Antriebsmittel ein Paar einfach wirkender fluidbetätigter Zylinder (30a, 30b) umfasst, die ein elastisches Mittel haben, welches die Verbindung zwischen dem beweglichen Eingriffsmittel (25a, 25b) und den Feststellhaltern (13a, 13b) aufrechterhält, wenn die einfach wirkenden fluidbetätigten Zylinder (30a, 30b) inaktiv sind; wobei die beweglichen Eingriffsmittel Sicherungsstifte (25a, 25b) umfassen, die jeweils direkt mit dem Endabschnitt des Schafts jedes der fluidbetätigten Zylinder (30a, 30b) verbunden sind und entlang einer Führung (26a, 26b) gleiten, welche mit dem festen Abschnitt (10) verbunden ist.

2. Die Schnellkupplungsvorrichtung gemäß Anspruch 1, **dadurch gekennzeichnet, dass** der fluidbetätigte Zylinder (30a, 30b) vom durch Öldruck betätigten Typ ist.

3. Die Schnellkupplungsvorrichtung gemäß Anspruch 1, **dadurch gekennzeichnet, dass** der fluidbetätigte Zylinder (30a, 30b) vom pneumatischen Typ ist.

4. Die Schnellkupplungsvorrichtung gemäß Anspruch 1, **dadurch gekennzeichnet, dass** die Sicherungsstifte (25a, 25b) austauschbar sind.

## Revendications

1. Dispositif de couplage rapide, en particulier pour un équipement de véhicule de travail, comprenant une section fixe (10) et une section amovible (20) qui peuvent être ajustées l'une à l'autre de manière détachable, ladite section fixe (10) étant fixée à un outil (60) d'un véhicule de travail, ladite section amovible (20) pouvant être associée à l'extrémité d'un bras dudit véhicule de travail, ladite section fixe (10) comprenant une paire de crochets (12a, 12b) apte à abriter un moyen d'engagement fixe (24) assemblé à ladite section amovible (20), ladite section amovible (20) comprenant un moyen d'engagement mobile (25a, 25b) qui interagit avec une paire de consoles de verrouillage (13a, 13b) assemblées à ladite section fixe (10), ledit dispositif comprenant en outre un moyen d'actionnement (30a, 30b) actionnant directement ledit moyen d'engagement mobile (25a, 25b); **caractérisé en ce que** ledit moyen d'actionnement comprend une paire de cylindres fonctionnant au fluide à action unique (30a, 30b) et dotés d'un moyen élastique qui maintient l'ajustement entre ledit moyen d'engagement mobile (25a, 25b) et lesdites consoles de verrouillage (13a, 13b) lorsque lesdits cylindres fonctionnant au fluide à action unique (30a, 30b) sont inactifs, ledit moyen d'engagement mobile comprenant des broches de verrouillage (25a, 25b), chacune connectée directement à la section terminale de la tige de chacun desdits cylindres fonctionnant au fluide (30a, 30b) et coulissant le long d'un guide (26a, 26b) assemblé à ladite section fixe (10).

2. Dispositif de couplage rapide selon la revendication 1, **caractérisé en ce que** ledit cylindre fonctionnant au fluide (30a, 30b) est de type fonctionnant à la pression d'huile.

3. Dispositif de couplage rapide selon la revendication 1, **caractérisé en ce que** ledit cylindre fonctionnant au fluide (30a, 30b) est de type pneumatique.

4. Dispositif de couplage rapide selon la revendication 1, **caractérisé en ce que** lesdites broches de verrouillage (25a, 25b) sont interchangeables.
